# EUROPEAN PATENT SPECIFICATION

(11) **EP 0 584 614 B1**
(45) Date of publication and mention of the grant of the patent: **11.09.1996**
(21) Application number: 93112637.9
(22) Date of filing: 06.08.1993
(51) Int. Cl.: F24J 2/14, F24J 2/10

(54) **Solar collector**
Solarkollektor
Collecteur solaire

(30) Priority: 26.08.1992 US 935272
(43) Date of publication of application: 02.03.1994
(73) Proprietor: Lai, Herman, Taichung (TW)
(72) Inventor: Lai, Herman, Taichung (TW)
(74) Representative: Casalonga, Axel

(56) References cited:
- DE-A- 2 547 351
- GB-A- 2 147 408
- US-A- 4 142 510
- US-A- 4 423 718

## Description

The invention relates to a solar collector.

A typical solar collector is shown in FIG. 3 and comprises a layer of heat insulating materials 60 disposed in the bottom portion of a housing 80, a glass sheet 90 disposed on top of the housing 80, a layer of tin foil 70 applied to the top of the materials 60, a plurality of brass tubes 40 disposed above the tin foil 70 and each including a heat collector plate 50 for collecting solar energy and for heating the water flowing through the tubes 40. The solar energy can not be suitably collected.

Other types of solar collectors include a number of concave surfaces, however, the tubes carrying the heating medium are disposed in the bottom portion of the concave surfaces, the solar energy collecting effect thereof is also bad.

US-A-4 423 718 describes a solar collector panel comprising a mirrored bottom sheet structured in a series of parallel linear throughs and a top window sheet. The top and bottom sheets are joined to provide a vacuum envelope. A plurality of parallel solar absorbing tubes are positioned at the concentration point of the parallel throughs. A compartment is formed for each tube and two concave reflecting surfaces. Each concave reflecting surface is disposed between two convex surfaces. Consequently, the concave surfaces are not adjacent. Each pipe is enclosed within a chamber such that a partition is formed between every two adjacent pipes and some light beams reflected by the bottom sheet are not concentrated on the tubes because they are directed on convex portions of said bottom sheet and then are dispersed.

The objective of the invention is to provide a solar collector having high energy collecting rate.

As claimed the solar collector comprises a housing, a plate disposed in a bottom portion of said housing and having a plurality of concave and reflecting surfaces formed in an upper portion thereof and tubes for accomodating a heat conducting medium therein, whereby, light shining on said concave and reflecting surfaces is reflected onto said tubes in order to heat said heat conducting medium. According to the invention, the concave and reflecting surfaces are arranged side by side such that cusps are formed between every two adjacent concave surfaces and the tubes are disposed above and extending along said cusps such that the center of curvature of each of the concave surfaces being located at the side portions of the tubes.
FIG. 1 is a cross sectional view of a solar collector taken along lines 1-1 of FIG. 2;
FIG. 2 is a cross sectional view taken along lines 2-2 of FIG. 1; and
FIG. 3 is a partial cross sectional view of the typical solar collector.

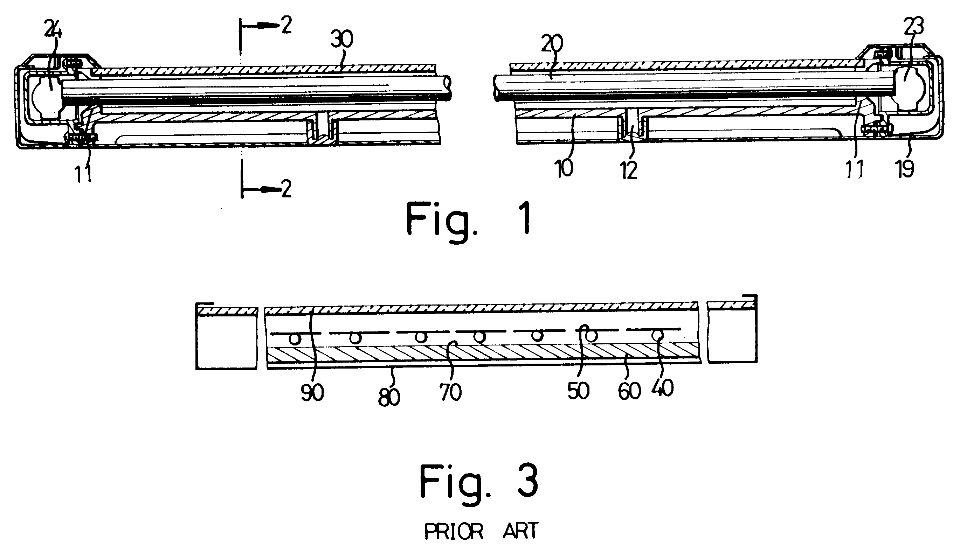

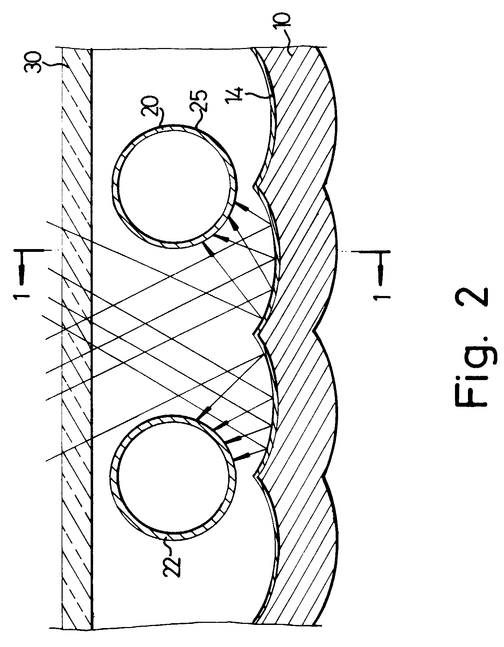

Referring to FIGS. 1 and 2, a solar collector comprises a plate 10 disposed in the bottom portion of a housing 19, a plurality of tubes 20 disposed above the plate 10 and having end portions supported in place by supporting members 11, a cover 30 disposed above the tubes and preferably made of glass materials; an inlet pipe 23 and an outlet pipe 24 disposed in the housing 19 and communicated with the end portions of the tubes 20 respectively, such that water and the like may flow into the outlet pipe 24 via the inlet pipe 23 and the tubes 20.

As best shown in FIG. 2, the plate 10 is wave shaped including a plurality of concave surfaces formed in the upper portion and arranged side by side such that a cusp is formed between every two adjacent concave surfaces, each of the concave surfaces has a layer of silver 14 formed thereon by such as electroplating processes so as to form a reflective surface, preferably, a respective tube 20 is disposed above the plate and extending along the cusp formed between every two adjacent concave surfaces such that one reflective surface provided on each side of each of the tubes 20, and the center of curvature of each of the concave surfaces is located at the side portions 22 of the tubes 20, such that the light reflected by the reflective surfaces 14 may be concentrated on the tubes 20 and such that the water flowing through the tubes 20 can be heated in a fast speed.

It is preferable that the outer peripheral surfaces of the tubes 20 are electroplated with a layer of chrome coating 25 in order to facilitating the absorption of the heat from the light, in which the chrome coating 25 has a black color.

Referring again to FIG. 1, at least one opening 12 is provided for vacuuming the space of the housing 19 formed between the plate 10 and the cover 30, and the opening 12 is blocked after vacuuming operations such that the space formed between the plate 10 and the cover 30 is a vacuum space, whereby, no media for conducting heat is existed in the space, such that no heat loss of the water will be occurred, in addition, the plate 10 and the cover 30 for forming the space will not be heated such that the plate 10 and the cover 30 need not be made of heat resistant materials.

Accordingly, the solar energy can be effectively collected by the solar collector.

## Claims

1. A solar collector comprising a housing (19), a plate (10) disposed in a bottom portion of said housing (19) and having a plurality of concave and reflecting surfaces formed in an upper portion thereof and tubes(20) for accomodating a heat conducting medium therein, whereby, light shining on said concave and reflecting surfaces is reflected onto said tubes (20) in order to heat said heat conducting medium characterized in that the concave and reflecting surfaces are arranged side by side such that cusps are formed between every two adjacent concave surfaces and the tubes (20) are disposed above and extending along said cusps such that the center of curvature of each of the concave surfaces being located at the side portions of the tubes.

2. A solar collector according to claim 1, wherein said concave and reflecting surfaces include a layer of silver (14) applied thereon for reflecting said light.

3. A solar collector according to claim 1 further comprising a cover (30) engaged on a top portion of said housing (19) and arranged such that a space is defined between said plate (10) and said cover (30) which space comprises a vacuum space.

4. A solar collector according to claim 3, wherein said housing (19) defines at least one opening therein for drawing a vacuum in said space.

5. A solar collector according to claim 1 further comprising a chrome coating (25) applied to an outer peripheral surface of each of said tubes (20) for facilitating heat absorption.

6. A solar collector according to claim 1 further comprising support means (11) for supporting said tube (20) and for supporting said tube (20) above and along said cusp of said plate (10).

## Patentansprüche

1. Solarkollektor, umfassend ein Gehäuse (19), eine Platte (10), die in einem Bodenabschnitt des Gehäuses (19) vorgesehen ist und eine Anzahl von in einem oberen Abschnitt davon gebildeten konkarven und reflektierenden Flächen aufweist, und Rohre (20) zur Unterbringung eines wärmeleitenden Mediums, wodurch auf die konkaven und reflektierenden Flächen scheinendes Licht auf die Rohre (20) reflektiert wird, um das wärmeleitende Medium zu erwärmen, dadurch **gekennzeichnet,** daß die konkaven und reflektierenden Flächen nebeneinander angeordnet sind derart, daß Umkehrpunkte zwischen jeweils zwei benachbarten konkaven Flächen gebildet sind und die Rohre (20) oberhalb der Umkehrpunkte angeordnet sind und sich entlang dieser erstrecken derart, daß der Krümmungsmittelpunkt jeder der konkaven Flächen an den Seitenabschnitten der Rohre liegt.

2. Solarkollektor nach Anspruch 1, bei dem die konkaven und reflektierenden Flächen eine dort aufgebrachte Silberschicht (14) zum Reflektieren des Lichtes enthalten.

3. Solarkollektor nach Anspruch 1, weiter umfassend eine Abdeckung (30), die sich auf einem oberen Abschnitt des Gehäuses (19) in Eingriff befindet und angeordnet ist derart, daß zwischen der Platte (10) und der Abdeckung (30) ein Raum abgegrenzt ist, welcher Raum einen Vakuumraum umfaßt.

4. Solarkollektor nach Anspruch 3, bei dem das Gehäuse (19) wenigstens eine Öffnung darin abgrenzt, um einen Unterdruck in dem Raum abzuziehen.

5. Solarkollektor nach Anspruch 1, weiter umfassend eine Chrombeschichtung (25), die auf eine Außenumfangsfläche jedes der Rohre (20) zur Erleichterung der Wärmeabsorbtion aufgebracht ist.

6. Solarkollektor nach Anspruch 1, weiter umfassend eine Halteeinrichtung (11) zum Halten des Rohrs (20) und zum Halten des Rohrs (20) oberhalb und entlang der Umkehrpunkte der Platte (10).

## Revendications

1. Collecteur solaire comprenant un boîtier (19), une plaque (10), placée dans une partie formant fond dudit boîtier (19) et comportant une pluralité de surfaces concaves et réfléchissantes formées dans sa partie supérieure, et des tubes (20) destinés à contenir un fluide conducteur de la chaleur, de sorte que de la lumière qui éclaire lesdites surfaces concaves et réfléchissantes est réfléchie sur lesdits tubes (20) pour chauffer ledit fluide conducteur de la chaleur,
caractérisé en ce que les surfaces concaves et réfléchissantes sont disposées côte à côte de telle façon que des points de rebroussement sont formés entre toutes les paires de surfaces concaves adjacentes et que les tubes (20) sont disposés au-dessus et le long desdits points de rebroussement si bien que le centre de courbure de chacune des surfaces concaves est situé sur les parties latérales des tubes.

2. Collecteur solaire selon la revendication 1, dans lequel une couche d'argent (14) est appliquée sur lesdites surfaces concaves et réfléchissantes pour réfléchir ladite lumière.

3. Collecteur solaire selon la revendication 1, comprenant en outre un couvercle (30) accroché sur une partie supérieure dudit boîtier (19) et disposé de telle sorte qu'un espace soit défini entre ladite plaque (10) et ledit couvercle (30), lequel espace est un espace sous vide.

4. Collecteur solaire selon la revendication 3, dans lequel ledit boîtier (19) comporte au moins une ouverture pour faire le vide dans ledit espace.

5. Collecteur solaire selon la revendication 1, comprenant en outre un revêtement de chrome (25) appliqué sur une surface périphérique extérieure de chacun desdits tubes (20) afin de faciliter l'absorption de la chaleur.

6. Collecteur solaire selon la revendication 1, comprenant en outre des moyens de support (11) pour supporter ledit tube (20) et pour supporter ledit tube (20) au-dessus et le long desdits points de rebroussement de ladite plaque (10).
